# EUROPÄISCHE PATENTSCHRIFT

(11) **EP 1 197 409 B1**
(45) Veröffentlichungstag und Bekanntmachung des Hinweises auf die Patenterteilung: **09.04.2008**
(21) Anmeldenummer: 01122836.8
(22) Anmeldetag: 22.09.2001
(51) Int. Cl.: B60T 8/00

(54) **Fahrdynamik-Regelsystem eines Kraftfahrzeuges**
Vehicle dynamics control method
Procédé pour le réglage de la dynamique de marche d'un véhicule automobile

(30) Priorität: 12.10.2000 DE 10050420
(43) Veröffentlichungstag der Anmeldung: 17.04.2002
(73) Patentinhaber: Bayerische Motoren Werke Aktiengesellschaft, 80809 München (DE)
(72) Erfinder: Müller, Rudi, 82281 Egenhofen (DE); Beiker, Sven, Dr., 80803 München (DE)

(56) Entgegenhaltungen:
- DE-A- 4 200 997
- DE-A- 19 515 061
- US-A- 5 435 193

## Beschreibung

Die Erfindung betrifft ein Fahrdynamik-Regelsystem eines insbesondere vierrädrigen Kraftfahrzeuges, wobei das zwischen Rädern und Fahrbahn zur Verfügung stehende Kraftschlußpotential durch ein Rechenverfahren ermittelt wird und unter Berücksichtigung hiervon ein Längskräfte auf die Fahrzeugräder aufbringendes Regelsystem geeignet betrieben wird. Zum technischen Umfeld wird neben der DE 198 22 481 A1 auf die DE 42 00 997 A1 verwiesen.

Bekannte Systeme zur Aufrechterhaltung der Fahrstabilität können unter dem Begriff "Fahrdynamikregelung" subsumiert werden und berücksichtigen im allgemeinen den querdynamischen und längsdynamischen Zustand eines Fahrzeuges. Dieser Zustand soll dann durch aktive Eingriffe z.B. in die Lenkanlage und/oder Bremsanlage und/oder Antriebsanlage des Kraftfahrzeuges geeignet beeinflusst werden. So beschreibt bspw. die genannte DE 198 22 481 A1 eine Fahrstabilitäts-Steuerungsvorrichtung für ein Fahrzeug, das ein vorderes rechtes, ein vorderes linkes, ein hinteres rechtes und ein hinteres linkes Rad sowie ein Bremssystem zur wahlweisen separaten Bremsung eines jeden der Räder hat. Die Steuerungsvorrichtung schätzt dann ein Verhältnis einer Längskraft zu einer Vertikallast, die auf jedes der Räder wirkt, ab, und betätigt bei einem gewünschten Bremsvorgang das Fzg.-Bremssystem derart, daß das genannte Verhältnis an jedem Rad einen im wesentlichen gleichen Wert einnimmt.

In der eingangs ebenfalls genannten DE 42 00 997 A1 ist ein Verfahren zur Ermittlung der fahrdynamischen Sicherheitsreserve eines Kraftfahrzeuges beschrieben. Dieses ist mit einem Lenkwinkelsensor, mit Beschleunigungssensoren sowie mit einem Raddrehzahlsignale liefernden ABS-Gerät ausgerüstet. Zur Ermittlung der fahrdynamischen Sicherheitsreserve werden im Steuergerät zuerst aus der Querbeschleunigung und dem Lenkwinkel ein Kraftschlußwert in Querrichtung, und dann aus der Raddrehbeschleunigung und der Längsbeschleunigung ein Kraftschlußwert in Längsrichtung ermittelt. Aus diesen beiden Kraftschlußwerten wird eine maximal erreichbare Längsbeschleunigung durch Multiplikation mit fahrzeugspezifischen Koeffizienten ermittelt, woraus dann eine Grenzkurve gebildet wird, mit welcher die aktuelle Quer- und Längsbeschleunigung des Fahrzeugs verglichen wird, um die fahrdynamische Sicherheitsreserve zu ermitteln.

Aufgabe der vorliegenden Erfindung ist die Ermittlung des vorhandenen Kraftschlußpotentials weiter zu verbessern und die somit geschätzte fahrdynamische sicherheitsreserve in einem Fahrdynamik Regelsystem gemäß Anspruch 1 bestmöglich zu nutzen. Diese Aufgabe wird durch die Merkmale des Kennzeichen von Anspruch 1 gelöst.

Vorteilhafte Weiterbildungen sind Inhalt der Unteransprüche.

Erfindungsgemäß wird somit zur Optimierung des Kraftschlusses nicht nur ein an sich bekannter, bislang üblicher Fahrdynamikregler herangezogen, der durch geeignete Eingriffe in das Bremssystem und/oder in die Steuerung des Fzg.-Antriebsaggregates stabilisierende Einflüsse in den einzelnen Radaufstandsebenen bewirkt bzw. die dort in der Horizontalebene zu übertragenden Längskräfte derart beeinflußt, daß ausreichende Fahrstabilität gewährleistet ist, sondern es erfolgt zusätzlich eine geeignete Verknüpfung mit weiteren Fahrwerk-Regelfunktionen, wie z.B. mit einer elektronisch regelbaren Hinterachslenkung oder einer Vorderachs-Überlagerungslenkung, wobei es sich bei diesen beiden Systemen um querdynamische Regelsysteme handelt, die Seitenkräfte ebenfalls in der Horizontalebene zwischen Rad/Reifen und Fahrbahn einleiten.

Zusätzlich zu einem (oder mehreren) querdynamischen Regelsystemen erfolgt eine Verknüpfung mit einem oder mehreren vertikaldynamischen Regelsystemen, wie z.B. mit einer elektronischen Dämpfkraftverstellung, einer Stabilisatorverstellung oder einer aktiven Federung, die - an sich bekannt - bislang vornehmlich der Verbesserung des Fahrkomforts dienen, und die Vertikalkräfte in das System Rad-Fahrbahn einbringen können. Da sich über diese Systeme in Vertikalrichtung zwischen den Rädern und der Fahrbahn die Radlasten (nämlich die Vertikalkräfte) direkt beeinflussen lassen, können diese Regelsysteme in besonders effizienter Weise auch zur Verbesserung des Fahrverhaltens und der Fahrsicherheit herangezogen werden.

Insgesamt können somit mit gezielten Eingriffen in die Steuerung des Antriebsaggregates sowie in das Bremssystem die Längskräfte und mit weiteren Eingriffen bspw. in das Lenkungssystem des Kraftfahrzeuges die Querkräfte und mit (noch) weiteren Eingriffen in ein in Vertikalrichtung wirkendes System die einzelnen Radlasten an den einzelnen Rädern derart gezielt geändert und dabei derart aufeinander abgestimmt werden, daß das vorhandene Kraftschlußpotential optimal oder quasioptimal, d.h. weitgehend ausgenutzt werden kann. In bestimmten (ansonsten kritischen) Fahrsituationen, in denen ein entsprechender Bedarf besteht, wird somit angestrebt, durch ein vertikaldynamisches und ein querdynamsiches Regelsystem zusätzlich zum Längskräfte auf die Fahrzeugräder aufbringenden Regelsystem das zur Verfügung stehende Kraftschlusspotential in weitgehend optimaler Weise auszunutzen.

Im Sinne der Erfindung wurde erkannt, daß mögliche Eingriffe bspw. in das Bremssystem oder in die Antriebsregelung des Kraftfahrzeuges zur Aufrechterhaltung der Fahrstabilität nur dann wirksam werden können, wenn zwischen den Rädern bzw. Reifen und der Fahrbahn ein ausreichendes Kraftschlußpotential zur Verfügung steht. Letzteres ist bekanntermaßen für jedes Rad eines bspw. vierrädrigen Kraftfahrzeuges von der individuellen Radlast in Vertikalrichtung abhängig, d.h. von der individuellen Radaufstandskraft, die im fahrdynamischen Zustand starken Änderungen unterworfen ist.

Im bekannten Stand der Technik wird diese Tatsache nicht oder nur unzureichend berücksichtigt, d.h. es wird nicht erkannt, ab wann die Reifen keine größeren Kräfte mehr übertragen können, wenn ein Rad gelenkt, gebremst oder angetrieben wird. Daher wird in den bekannten Fahrdynamik-Regelsystemen auch nicht erkannt, wann der Eingriff des Regelsystems keinen weiteren Effekt auf die Fahrzeugbewegung haben kann, nachdem die Kraftschlußgrenze eines oder mehrerer Räder bereits erreicht ist.

Dabei stellt sich diese zusätzliche Problematik insbesondere dann, wenn unterschiedliche Fahrwerk-Regelsysteme vorgesehen sind, die parallel zueinander das Fahrzeug-Fahrverhalten beeinflussen können, ohne dabei direkt funktional miteinander verknüpft zu sein. Beispiele für derartige unterschiedliche Fahrwerk-Regelsysteme sind die bereits genannten querdynamischen und vertikaldynamischen Systeme, die sich im bekannten Stand der Technik bei der an sich gewünschten Ausnutzung des Kraftschlußpotentials durchaus gegenseitig behindern oder in ihrer Wirkung neutralisieren können.

Die Erfindung löst diese weitere Problematik indem in die besagte Berechnung des Kraftschlußpotentials (die im Oberbegriff des Anspruchs 1 angegeben ist) neben den in der Horizontalebene zwischen den Rädern und der Fahrbahn übertragenen Kräften zusätzlich die in Vertikalrichtung orientierte Radlast mit eingeht. In einer besonders vorteilhaften Weiterbildung ist hierfür an jedem Rad ein Aufbau-Höhenstandssensor vorgesehen, aus deren Signalen die in Vertikalrichtung orientierte Radlast auf relativ einfache Weise ausreichend genau bestimmbar ist, wie an späterer Stelle noch ausführlich erläutert wird.

Zur Verbesserung des Fahrverhaltens und der Fahrsicherheit wird somit vorgeschlagen, das Kraftschlußpotential zwischen Reifen und Fahrbahn optimal auszunutzen, wozu das jeweils vorhandene Kraftschlußpotential durch ein Rechenverfahren ermittelt wird, welches die Signale diverser Fahrwerksensoren sowie fahrwerkspezifische Kenndaten des Fahrzeugs verarbeitet.

Im weiteren wird ein erfindungsgemäßes Fahrdynamik-Regelsystem im Sinne eines bevorzugten Ausführungsbeipieles für ein vierrädriges Kraftfahrzeug, insbesondere einen Personenkraftwagen, erläutert, der/das mit einem der bekannten Fahrdynamikregelsysteme und einer beliebigen Zweiachs-Niveauregulierung ausgestattet ist. Bekanntermaßen erlaubt es eine derartige Zweiachs-Niveauregulierung, den Höhenstand des Aufbaus gegenüber der Fahrbahn radindividuell zu verändern, d.h. für jede - bevorzugt als Einzelradaufhängung ausgebildete - Radaufhängung kann der Abstand zwischen dem Bodenblech der Fzg.-Karosserie und dem Rad in gewissen Bereichen beliebig eingestellt werden. Erfindungswesentlich können dabei sämtliche näher beschriebenen Merkmale sein.

An einem derartigen Fahrzeug, an welchem grundsätzlich die Möglichkeit gegeben sein muß, die in Fahrtrichtung orientierte (negative oder positive) Längsbeschleunigung sowie die in Querrichtung hierzu orientierte Querbeschleunigung zu messen, stehen im allgemeinen die folgenden Sensoren zur Verfügung:
- 4 Höhenstandssensoren zur Messung der Ein- und Ausfederwege des Aufbaus an den einzelnen Radaufhängungen
- 4 Raddrehzahlfühler, d.h. die sog. ABS-Sensoren
- ein Drehraten- oder Giergeschwindigkeitssensor
- ein Querbeschleunigungssensor,
- ein Lenkwinkelsensor
- zumindest ein Bremsdrucksensor, sowie
- ein Drosselklappenwinkelsensor oder ein adäquates Signal aus der Steuerungselektronik des Fzg.-Antriebsaggregates zur Ermittlung von dessen Drehmoment- oder Leistungsabgabe.

Dabei kann mit den drei letztgenannten Sensoren der Fahrerwunsch sensiert werden, nämlich eine Lenkbewegung für eine gewünschte Kurvenfahrt sowie Bremsen und "Gasgeben" für eine gewünschte negative oder positive Beschleunigung in Fzg.-Längsrichtung. Mit den davor genannten Sensoren hingegen kann das Fahrverhalten des Fahrzeugs als Resultat der Fahrervorgabe festgestellt werden. Durch Vergleich des somit festgestellten sog. Ist-Fahrzustands mit einem aus dem sensierten Fahrerwunsch ermittelten sog. Soll-Fahrzustand kann daraufhin ein Fahrdynamik-Regelsystem in an sich bekannter Weise feststellen, ob sich das Fahrzeug noch auf stabilem

Kurs befindet oder ob die Aktuatorik des Regelsystems bspw. durch Eingriffe in das Bremssystem oder in die Steuerung des Fzg.-Antriebsaggregates korrigierend tätig werden muß.

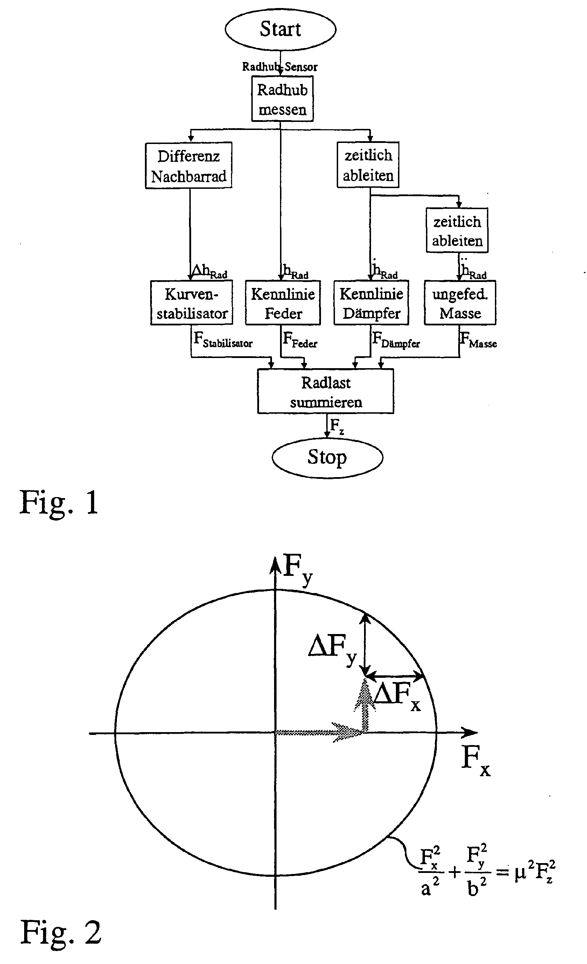

Ergänzend zu diesem bekannten Stand der Technik kann nun bevorzugt über die an den einzelnen Rädern vorhandenen Höhenstandssensoren gemäß der beigefügten Diagramm-Darstellung nach **Fig.1** aus dem Einfederungszustand eines jeden Rades dessen aktuelle Radlast ermittelt werden.

Hierfür sind die selbstverständlich bekannten Kennlinien der Aufbau-Federelemente, über welche sich der Fzg.-Aufbau in Vertikalrichtung auf den Rädern abstützt, sowie die zugeordneten Stabilisatorraten und ggf. die Kennlinien der ebenfalls wie üblich vorgesehenen Stoßdämpfer zu berücksichtigen. Im einzelnen kann, wenn die Radhübe der einzelnen Räder bekannt sind, zunächst der darin enthaltene Anteil der Radlast errechnet werden, der sich aufgrund des gleichseitigen Einfederns ergibt. Bei Beachtung der Radhubdifferenz der Räder einer Achse des Fahrzeuges wird der Anteil aufgrund wechselseitigen Einfederns bestimmt. Um die dynamischen Kräfte zu berücksichtigen, kann zusätzlich noch die Radhubgeschwindigkeit gebildet werden, und zwar durch zeitliche Differentiation des Höhenstandssensorsignals, die dann zusammen mit der Dämpferkennlinie und zugehöriger Übersetzung die Dämpferkraft ergibt. Durch weitere Differentiation kann durch Bestimmen der Radhubbeschleunigung auch noch die Trägheitskraft der sog. ungefederten Masse einfließen.

Auf die beschriebene Weise kann somit die Radlast eines jeden Rades durch Addition aller vier genannten Anteile beliebig genau bestimmt werden, so wie dies in **Fig.1** dargestellt ist, wobei der üblichen Fachterminologie entsprechend eine Kraft mit dem Buchstaben "F" und die Vertikalrichtung mit der Koordinate "z" bezeichnet ist, während der Buchstabe "h" eine Höhe oder Längserstreckung in z-Richtung symbolisiert und die zeitliche Differentiation durch einen Punkt über der zu differenzierenden Größe (hier: h) verdeutlicht ist.

In einem zweiten Schritt sind nun die maximal möglichen Reifenkräfte in der Horizontalebene zwischen Rad/Reifen und Fahrbahn zu bestimmen, und zwar sowohl in Fzg.-Längsrichtung (gekennzeichnet durch die Koordinate "x") als auch in Fzg.-Querrichtung (gekennzeichnet durch die Koordinate "y").

Da hierfür eine relativ gute Kenntnis der Reifeneigenschaften (möglichst in Form eines Reifenkennfelds) sowie der Fahrbahnbeschaffenheit erforderlich ist, wird die Bestimmung mit dem o.g. Einsatz an Sensoren relativ schwierig. Grundsätzlich läßt ein Reibwertsensor zur Ermittlung des Reibwertes zwischen Rad bzw. Reifen und Straße eine deutliche Verbesserung der Genauigkeit erwarten, falls jedoch nicht auf einen solchen Reibwertsensor zurückgegriffen werden kann, so kann eine grundsätzlich bereits bekannte Reibwertschätzung eines bereits bekannten Fahrdynamikregelungs-Systems herangezogen werden. Eine solche Reibwertschätzung ist bspw. auch in den in jüngerer Zeit vermehrt bekannt gewordenen elektronischen Stabilisierungsprogrammen (ESP oder auch DS genannt) enthalten.

Zusammen mit der in beschriebener Weise bereits bestimmten Radlast F_{z} kann nun zusammen mit einem gemessenen oder geeignet geschätzten Reibwert (wie üblich mit dem griechischen Buchstaben "µ" bezeichnet) ermittelt oder zumindest hinreichend genau abgeschätzt werden, welche Horizontalkräfte vom Rad bzw. Reifen maximal auf die Fahrbahnoberfläche übertragen werden können.

Im Folgenden wird beispielhaft zur Vereinfachung der Rechnung die durchaus übliche Annahme getroffen (vgl. diesbezüglich auch den eingangs zitierten druckschriftlichen Stand der Technik), daß das sog. Reifenkennfeld - wie in der beigefügten **Fig.2** dargestellt - durch Ellipsen angenähert werden kann, nämlich in Form der sog. "Kraftschlußellipse". Dabei sei im folgenden die in x-Richtung (Längsrichtung) liegende Ellipsen-Halbachse mit dem Buchstaben "a" und die in y-Richtung (Querrichtung) liegende Ellipsen-Halbachse mit dem Buchstaben "b" bezeichnet.

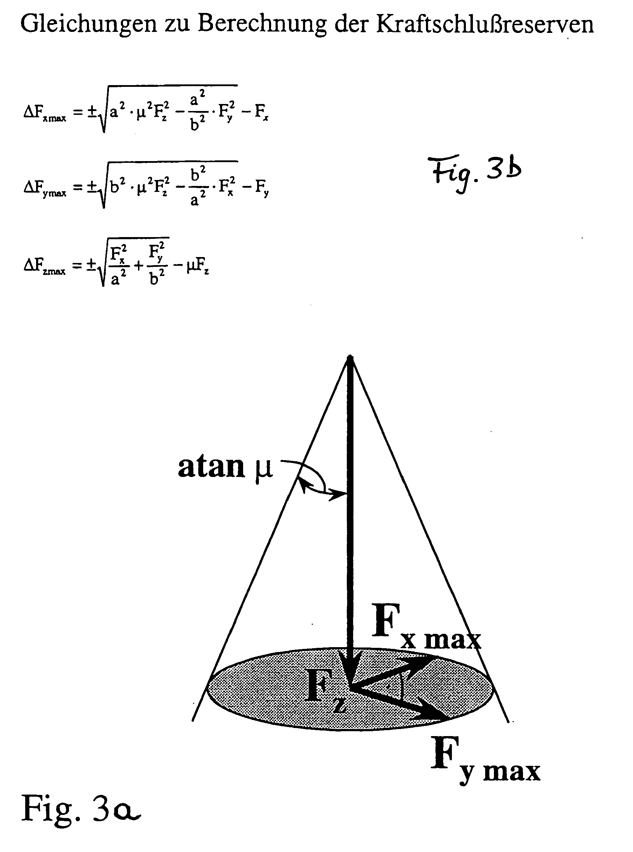

Sollen nun wie vorgeschlagen Vertikalbewegungen des Kraftfahrzeug-Aufbaus gegenüber den Rädern in die Berechnung des Kraftschlußpotentials mit eingehen, welche zu Radlastschwankungen (in Vertikalrichtung z) führen, so ist theoretisch jeder möglichen Radlast eine eigene Ellipse zuzuordnen, wobei die Flächen der Ellipsen mit steigender Radlast zunehmen. In einem dreidimensionalen Koordinatensystem, bei welchem die zwischen Rad und Fahrbahn übertragenen Horizontalkräfte die beiden Ellipsenachsen definieren und die darauf senkrecht stehende dritte Achse durch die Vertikalkraft (zwischen Rad und Fahrbahn) beschrieben wird, können nun diese Ellipsen unterschiedlicher Vertikalkräfte übereinander angeordnet werden, wodurch sich quasi als Hüllkörper ein Kegel mit elliptischer Grundfläche ergibt, der als "Kraftschluss-Kegel" bezeichnet werden kann. Zumindest gilt dies solange, wie die horizontalen Reifenkräfte sich näherungsweise durch einen linearen Zusammenhang von der Radlast abbilden lassen, so wie dies in **Fig.3a** dargestellt ist. Der Öffnungswinkel dieses Kraftschlußkegels ergibt sich dabei-wie in der Figur angegeben - aus dem momentanen Reibwert µ, wobei auch ersichtlich wird, daß sich mit abnehmenden µ proportional alle Ellipsenflächen verringern.

Bei völlig exakter Betrachtungsweise wäre infolge der tatsächlichen Reifeneigenschaften die Mantelfläche dieses Kraftschlußkegels entsprechend der Nichtlinearitäten im Übergangsbereich gekrümmt, was auch in einem Rechenprogramm berücksichtigt werden kann. Für das folgende vereinfachte Rechenverfahren wird jedoch (zunächst noch) von einer geraden Mantellinie des Kraftschlußkegels ausgegangen.

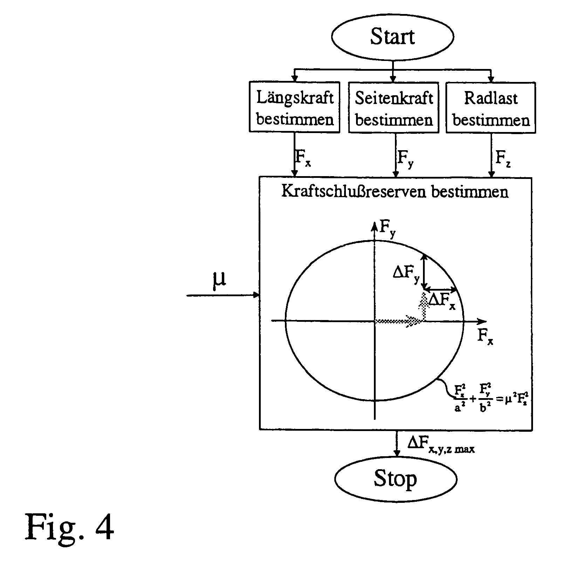

Im Detail gibt die Größe jeder einzelnen Ellipsenfläche für die jeweils zugehörige Radlast das maximal zur Verfügung stehende Kraftschluss-Potential an, welches sich - wie in Fig.3a dargestellt - durch vektorielle Addition der beiden Horizontalkomponenten F_{x,max} und F_{y,max} ergibt. Mit der Kenntnis dieser maximalen Horizontalkräfte ist nun die Kraftschlussgrenze des oder der einzelnen Reifen (oder Rades) bestimmt. Für den praktischen Gebrauch ist jedoch nicht diese Kraftschlussgrenze selbst, sondern der Abstand des momentanen Betriebspunkts der Reifenkräfte von dieser Kraftschlussgrenze von Interesse. Es interessiert also die im aktuellen Betriebspunkt noch vorliegende Kraftschluss-Reserve, d.h. das unter Berücksichtigung der aktuellen Kraftschluss-Ausnutzung noch verbleibende Kraftschlusspotential. Diese Kraftschluss-Reserve wird dabei (in der figürlichen Darstellung des sog. Kraftschluss-Kegels) durch den kürzesten Abstand zwischen dem maximal zur Verfügung stehendem Kraftschluss-Potential und der aktuellen Kraftschluss-Ausnutzung gebildet, d.h. zwischen der Mantelfläche des Kraftschluss-Kegels und dem aktuellen Betriebspunkt. Diese sog. Kraftschluss-Reserve wird nun in einem dritten Berechnungsschritt bestimmt, der prinzipiell in **Fig.4** dargestellt ist.

Benötigt werden hierfür selbstverständlich die augenblicklichen Reifenkräfte, die jedoch teilweise, nämlich in Form der bereits bestimmten Radlast F_{z} schon bekannt sind, oder die sich (in der Horizontalebene) mit Hilfe der genannten Sensorik in bekannter Weise schätzen lassen. So kann die in Querrichtung y orientierte Seitenkraft F_{y} aus der Quer- und Gierbeschleunigung näherungsweise bestimmt werden und die in Fzg.-Längsrichtung x orientierte Längskraft Fₓ aus der Längsbeschleunigung bzw. aus dem aktuellen Abgabe-Drehmoment des Fzg.-Antriebsaggregates sowie aus den aktuellen Bremsdrücken ermittelt werden. Hierfür sind der bereits genannte Querbeschleunigungs- und Gierratensensor sowie die Informationen über die Rad-Drehzahen erforderlich und außerdem geeignete Werte aus dem Steuerungssystem des Fzg.-Antriebsaggregates sowie aus der an sich bekannten Bremsdruckschätzung eines bekannten Fahrdynamikregelung-Systems. Falls dabei die Bestimmung der jeweiligen Kräfte z.B. durch eine Fahrbahnneigung verfälscht wird, so können auch hierfür geeignete Schätzverfahren angewendet werden, wie sie aus der Fahrdynamikregelung grundsätzlich bekannt sind.

Nunmehr sind also die aktuellen Horizontalkräfte zwischen Rad/Reifen und Fahrbahn sowie für jedes Rad einzeln die aktuelle Kraftschlußellipse - in Kenntnis der Radlast/Vertikalkraft aus dem sog. Kraftschlußkegel abgeleitet-bekannt, so daß wesentlich genauer als im bekannten Stand der Technik eine Kraftschluss-Reserve als Differenz dieser beiden bekannten Werte bestimmt werden kann. Diese Kraftschluss-Reserve kann dann herangezogen werden, um ein Fahrdynamik-Regelsystem in günstiger Weise betreiben zu können, was an späterer Stelle noch näher erläutert wird.

Zunächst sei jedoch eine vorteilhafte Weiterbildung der vorliegenden Erfindung beschrieben, die das vorhandene Kraftschlußpotential quasi auf die einzelnen Koordinaten aufteilt. Von Interesse ist somit nicht nur der kürzeste Abstand des augenblicklichen Betriebspunktes bis zur Kraftschlußgrenze innerhalb der aktuellen Kraftschlußellipse, sondern auch die maximal mögliche Änderung für jede der drei Kräfte Fₓ, F_{y} und F_{z}, und zwar jeweils innerhalb des bereits erläuterten Kraftschlußkegels soweit, bis das Kraftschlußpotential ausgeschöpft ist. In anderen Worten ausgedrückt kann sodann ermittelt bzw. berücksichtigt werden, welches Kraftschlußpotential bspw. in Längsrichtung (x) noch vorhanden ist, nachdem sich die Radlast in Vertikalrichtung (F_{z}) verändert hat oder mittels einer geeigneten Maßnahme sogar in geeigneter Richtung gezielt verändert wurde.

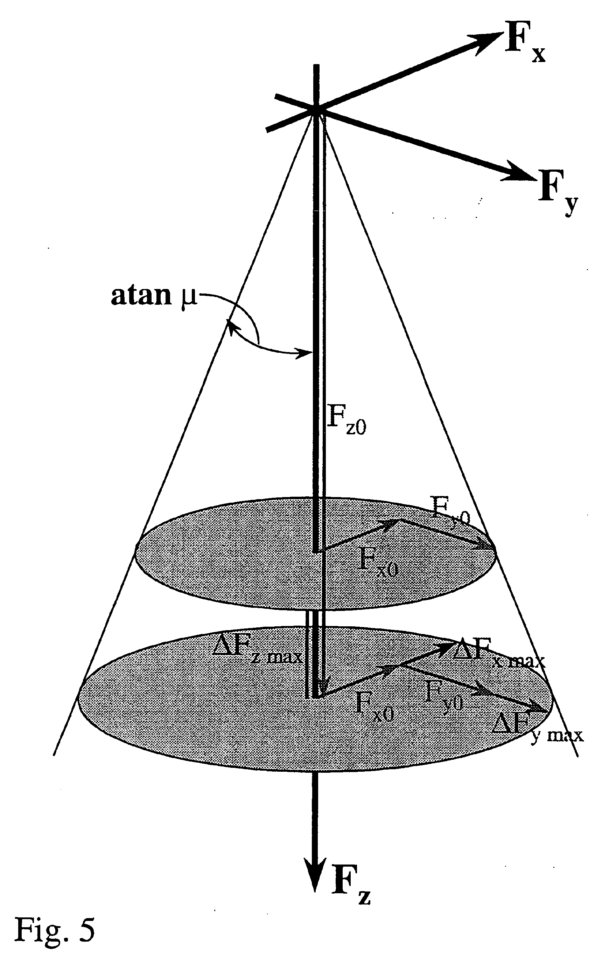

Am Beispiel des beschriebenen und in **Fig.3a** dargestellten Kraftschluss-Kegels mit elliptischer Grundfläche ergeben sich die in **Fig.3b** in Form von Gleichungen angegebenen maximal möglichen Änderungen für die Kräfte F in den einzelnen Koordinaten-Richtungen x, y, z, wobei ausdrücklich darauf hingewiesen sei, dass eine derartige Berechnung lediglich als ein Ausführungsbeispiel zu verstehen ist. Anhand von **Fig.5** wird dieses Verfahren im folgenden nochmals ausführlicher erläutert:

Ausgehend von einem aktuellen Betriebspunkt auf der unteren Ellipse, der durch die Vertikalkraftkomponente F_{z0} sowie die Längskraft Fₓ₀ und die Seitenkraft F_{y0} beschrieben ist - (diese Komponenten stellen die momentane Kraftschluss-Ausnutzung dar) -, werden einerseits die jeweiligen Kraftschlußreserven in x- und y-Richtung (nämlich ΔF_{x,max} und ΔF_{y,max}) bestimmt. Gleichzeitig wird angegeben, wie stark sich die Vertikalkraft noch ändern dürfte, bis das Rad an seiner Kraftschluss-Grenze angelangt ist. Bspw. gibt in **Fig.5** der Vektor ΔF_{z,max} an, wie weit das Rad noch ausfedern dürfte, bis bei unveränderten Horizontalkräften das zur Verfügung stehende Kraftschluss-Potential ausgeschöpft ist. Wie ersichtlich führt der Vektor ΔF_{z,max} von der unteren Ellipsen-Ebene zu einer darüber liegenden Ellipse, in welcher ein Betriebspunkt mit diesen Horizontal-Kräften Fₓ₀ und F_{y0} exakt auf dem Ellipsenrand liegt und somit das zur Verfügung stehende Kraftschlußpotential vollständig ausschöpft.

Auf die beschriebene Weise können somit für jedes Rad separat die aktuellen Kraftschlussreserven unter Berücksichtigung aller drei Dimensionen ausreichend genau (und wegen der Berücksichtigung der Vertikalbewegungen des Aufbaus vor allem erheblich genauer als im bekannten Stand der Technik) ermittelt werden. Daraufhin ist es möglich, diese ermittelten Kraftschlußreserven einem sogenannten "Kraftschlußregler" zuzuführen, der unter Berücksichtigung des gewünschten Fahrmanövers eine günstige Nutzung des aktuellen Kraftschlußangebotes veranlaßt.

Ehe hierauf näher eingegangen wird, sei noch darauf hingewiesen, daß für Fälle, in denen eine höhere Genauigkeit als gemäß der obigen Beschreibung berechnet erwünscht wird, sich die genannten Reifenkennfelder anstelle durch die sog. Kraftschluß-Ellipsen mathematisch durch Polynome in beliebiger Genauigkeit annähern lassen. Dann mutieren die Ellipsengleichungen in Fig. 3b zu Parabeln n-ter Ordnung und der bislang sog. Kraftschlußkegel läßt sich dann bspw. durch ein sog. dreidimensionales Polynom-Kennfeld darstellen. Ferner sei darauf hingewiesen, daß für die Beschreibung des erläuterten Verfahrens zur Ermittlung des Kraftschlußpotentials ein an sich bekannter Fahrdynamikregler als Basissystem gewählt wurde, weil ein solcher i.a. mit den wichtigsten Sensoren ausgestattet ist, die zur Bestimmung des Kraftschlusses erforderlich sind. Stattdessen können jedoch auch andere Systeme mit ähnlicher Sensorik zugrunde gelegt werden.

An das soweit beschriebene System kann sich nun - wie bereits kurz erwähnt wurde - ein sog. Kraftschlußregler anschließen, der unter Berücksichtigung eines gewünschten Fahrmanövers eine günstige Nutzung des aktuellen Kraftschlußangebotes veranlaßt. Mit dem Begriff "Kraftschlußregler" wird ein bspw. innerhalb eines Fahrdynamikreglers enthaltener Funktionsumfang bezeichnet, der zur Optimierung des Kraftschlusses dient. Bevorzugt erfolgt nun in diesem Kraftschlußregler eine Priorisierung bzw. Aufteilung des berechneten bzw. übermittelten Kraftschlußpotentials an die beteiligten Regelfunktionen nach einem festgelegten Schlüssel.

Wie weiter oben bereits erläutert wurde, kann damit ein System betrieben werden, das nicht nur die in Fzg.-Längsrichtung verlaufenden Längskräfte in die Horizontalebene zwischen Rad/Reifen und Fahrbahn geeignet einleitet, sondern zusätzlich ein querdynamisches sowie ein vertikaldynamisches Regelsystem. Als derartige zusätzliche Fahrwerk-Regelfunktionen sind bspw. eine elektronisch regelbare Hinterachslenkung oder einer Vorderachs-Überlagerungslenkung zu nennen, wobei es sich bei diesen beiden Systemen um querdynamische Regelsysteme handelt. Zusätzlich sollen gezielte Eingriffe in ein oder auch mehrere vertikaldynamische(s) Regelsystem(e) erfolgen, wie z.B. in Form einer elektronischen Dämpfkraftverstellung, einer Stabilisatorverstellung oder einer aktiven Federung. Diese drei letztgenannten Systeme sind an sich grundsätzlich bekannt, dienten jedoch bislang vornehmlich der Verbesserung des Fahrkomforts. Da sich über diese vertikaldynamischen Systeme jedoch auch die Radlasten direkt beeinflussen lassen, können sie erfindungsgemäß ebenfalls zur Verbesserung des Fahrverhaltens und der Fahrsicherheit herangezogen werden.

Bevorzugt kann ein sog. Kraftschlußregler nicht nur das aktuelle Kraftschlussangebot ermitteln, sondern zusätzlich die Aufgabe haben, die jeweiligen Anforderungen der beteiligten Systeme miteinander zu vergleichen und Prioritäten für ihre Umsetzung festzulegen. Beispielsweise bzw. bevorzugt kann/sollte an erster Stelle die Fahrsicherheit stehen, wonach allgemein auf ein gutes Fahrverhalten Wert gelegt werden kann und woran sich als letztes (mit der geringsten Wichtigkeit) sog. Komfortfunktionen anschließen können.

In diesem Sinne haben Bremsvorgänge, die vom Fahrer eingeleitet werden, Vorrang vor allen anderen Regelungsfunktionen; d.h. alle Stellsignale an die möglichen Aktuatoren, über die Einfluß auf die Fahrdynamik genommen werden kann, werden hinsichtlich ihrer Auswirkungen auf den Kraftschluß überprüft und ggf. derart korrigiert, daß eine maximale Bremsverzögerung erzielt wird. Selbstverständlich können nach Möglichkeit daneben aber auch andere Funktionen mit erfüllt werden. Wird z.B. das Fahrzeug während einer Stabilitätsregelung in der Kurve vom Fahrer stark abgebremst, können die Bremskräfte derart verteilt werden, daß sich neben dem kürzestmöglichen Bremsweg auch ein weitgehend stabiles Kurvenverhalten einstellt. Darüber hinaus kann über die vertikaldynamischen Regelsysteme - in diesem Fall insbesondere über die elektronische Stabilisatorverstellung - zusätzlich noch Einfluß auf die Radaufstandskräfte genommen werden, mit dem Ziel, die Radlasten an diejenigen Räder zu verlagern, die den höchsten Kraftschlußbedarf haben.

Wie bereits erwähnt, wird ein derartiger Funktionsumfang innerhalb eines ansonsten an sich bekannten Fahrdynamikreglers, der das Kraftschlußangebot abschätzt und für eine optimale Nutzung sorgt, als Kraftschlußregler bezeichnet. Ein derartiger erfindungsgemäßer Kraftschlußregler kann nun entweder von vornherein in der Systemarchitektur berücksichtigt sein oder nachträglich, d.h. zu einem bereits existierenden Fahrdynamikregler hinzugefügt werden.

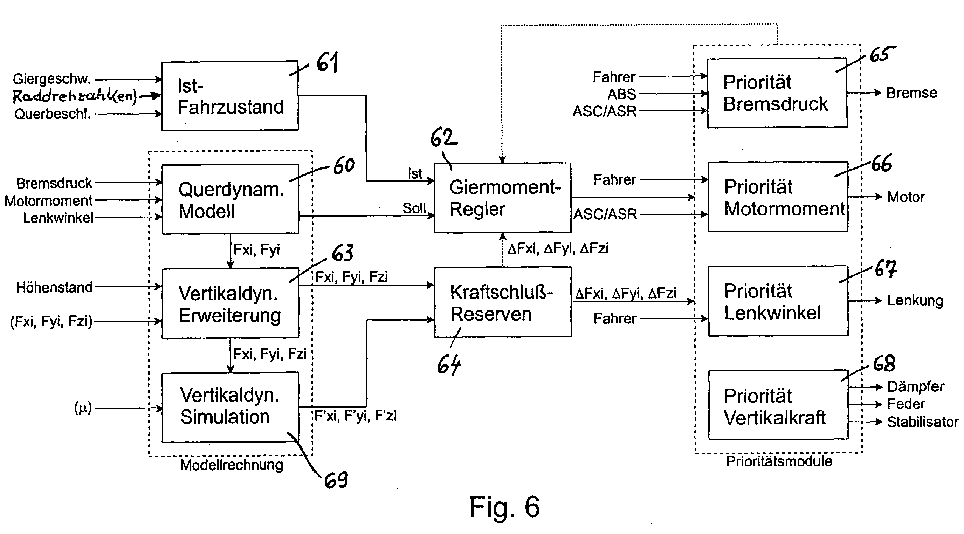

In der beigefügten **Fig.6** ist ein Kraftschlußregler in einem Basissystem integriert, das bereits über ein Fahrzeug-Simulationsmodell verfügt, wie z.B. in einem Fahrdynamikregler. Dieser bedient sich üblicherweise eines Ein- oder Zweispur-Rechenmodells, das - wie bereits ausgeführt wurde - unter Auswertung des Bremsdrucksensors, Signalen von der Steuerung des Fzg.-Antriebsaggregates und eines Lenkwinkelsensors die vom Fahrer beabsichtigte Längs- und Querbewegung des Fahrzeugs (d.h. den Fahrerwunsch hinsichtlich Geschwindigkeit, Verzögerung oder Beschleunigung sowie Kurvenfahrt) vorausberechnet, d.h. den sog. Soll-Fahrzustand ermittelt. Hierzu benötigt der Simulator die wichtigsten fahrzeugspezifischen Parameter wie Schwerpunktlage, Trägheitsmomente, Radstand, Spurweite und Schräglaufsteifigkeiten der jeweiligen Reifen.

In **Fig.6** ist ein solches (grundsätzlich bekanntes) Fahrzeugmodell, welches den Soll-Fahrzustand ("Soll") ermittelt, als "querdynamisches Modell" bezeichnet und zusätzlich mit der Bezugsziffer 60 versehen. In einem parallel hierzu vorgesehenen Software-Modul 61, das mit "Ist-Fahrzustand" bezeichnet ist, wird aus den Signalen des Giergeschwindigkeitssensors, des Querbeschleunigungssensors sowie aus den Raddrehzahlen der tatsächliche Fahrzustand ("Ist") ermittelt. In einem mit der Bezugsziffer 62 versehenen und "Giermoment-Regler" genannten Modul wird dann der tatsächliche Fahrzustand "Ist" mit dem Soll-Fahrzustand "Soll" verglichen. Falls die beiden voneinander abweichen, wird im Giermomentregler 62 auf an sich bekannte Weise ein Kompensationsmoment errechnet. Im bekannten Stand der Technik erfolgt daraufhin eine Stabilisierung der Fahrzeuges durch gezielte Eingriffe in das Bremssystem sowie in das Antriebssystem, d.h. in die Steuerung des Fzg.-Antriebsaggregates, und zwar derart, daß letztlich der tatsächliche Ist-Fahrzustand mit dem Soll-Fahrzustand im wesentlichen zur Deckung gebracht wird.

In einer bevorzugten Ausführungsform der vorliegenden Erfindung werden nun diese bislang genannten drei Module 60, 61 und 62, die in dieser oder ähnlicher Weise aus herkömmlichen Fahrdynamikreglern bekannt sind, weitgehend übernommen, um eine schnelle und effiziente Fahrdynamikregelung sicherzustellen. Zusätzlich kann jedoch das (zweispurige) "querdynamische Modell" 60 um ein Modul 63, das eine "vertikaldynamische Erweiterung" bereitstellt und solchermaßen bezeichnet ist, ergänzt werden.

Mit Hilfe dieser "vertikaldynamischen Erweiterung" 63 können gemäß obigen Erläuterungen wie in **Fig.1** dargestellt die Radlasten F_{z,i} der vier Räder des PKW (i=1,2,3,4) ermittelt werden, wofür - wie bereits erläutert wurde - die Signale der Höhenstandssensoren verwendet werden. Anhand der im "querdynamischen Modell" 60 enthaltenen Modelldaten können hieraus dann die Längskräfte F_{x,i} und Seitenkräfte F_{y,i} jeweils für die einzelnen Reifen (i=1,2,3,4) wie bereits erläutert abgeschätzt werden. In einer alternativen Ausführungsform können die genannten Kräfte F_{x,i} F_{y,i} F_{z,i} jedoch auch direkt gemessen werden, sofern geeignete Kraft-Sensoren (z.B. mit der Reifenverformung als Meßgröße) zur Verfügung stehen, was in **Fig.6** dadurch dargestellt ist, daß neben dem Höhenstand diese drei Kräfte als Eingangssignale für das Modul 63 in Klammern gesetzt sind.

Mit Kenntnis dieser wesentlichen radindividuellen drei Kräfte F_{x,i} F_{y,i} F_{z,i} lassen sich daraufhin in einem weiteren Modul 64, das mit dem Begriff "Kraftschluss-Reserven" bezeichnet ist, gemäß den obigen Erläuterungen in Verbindung mit den **Figuren 3****,** **4****,** **5** die jeweiligen Kraftschlußreserven ΔF_{x,i}, ΔF_{y,i} und ΔF_{z,i} ermitteln, und zwar für jedes Rad (i=1,2,3,4) einzeln in allen drei Dimensionen. Daraufhin können diese Kraftschlußreserven ΔF_{x,i}, ΔF_{y,i} und ΔF_{z,i} direkt sog. Prioritätsmodulen 65 bis 68 und/oder dem (bekannten) Giermoment-Regler 62 zugeführt werden. Letzterer kann erforderlichenfalls direkt geeignete stabilisierende Eingriffe vornehmen, während in den sog. Prioritätsmodulen 65, 66, 67, 68 - wie weiter oben bereits kurz erwähnt wurde und an späterer Stelle noch ausführlicher erläutert wird - über geeignete Eingriffe in ein querdynamisches sowie in ein vertikaldynamisches Fahrwerks-Regelsystem entschieden wird und daraufhin geeignete Eingriffe vorgenommen werden.

Bevor hierauf näher eingegangen wird, soll jedoch noch eine weitere vorteilhafte (fakultative) Weiterbildung beschrieben werden. Demnach werden die Kraftschlußreserven ΔF_{x,i}, ΔF_{y,i}, und ΔF_{z,i}, (auch Kraftschlußpotential genannt) noch um Voraussagewerte ergänzt, die mit Hilfe eines Moduls 69, das als "vertikaldynamische Simulation" bezeichnet ist, gewonnen werden. Auf an und für sich bekannte Weise wird in diesem Modul 69 das Schwingungsverhalten des Fahrzeugs nachgebildet und die Fahrzeugreaktion vorausbestimmt, soweit es die jeweils verfügbaren Sensoren zulassen.

So werden aus den Bremsmanövern und Anfahrmanövern des Fahrzeugs dessen Nickverhalten, aus den Lenkmanövern das Wankverhalten sowie aus den Höhenstandssignalen das Hub-Schwingverhalten des Aufbaus vorausberechnet und die zu erwartenden Auswirkungen auf die Längskräfte F_{x,i}, auf die Seitenkräfte F_{y,i} und auf die Vertikalkräfte F_{z,i} abgeschätzt. Dadurch ist es möglich, neben den aktuellen Kräften F_{x,i}, F_{y,i} F_{z,i} auch deren voraussichtliche Entwicklungstendenz in die Schätzung des Kraftschlußpotentials (d.h. in die Ermittlung der Kraftschlußreserven) mit einzubeziehen, um möglichst frühzeitig auf eventuelle Änderungen reagieren zu können. Eine besondere Funktionsgüte wird erzielt, wenn zusätzlich durch vorausschauende Sensoren (z.B. einen Reibwertsensor am Fahrzeugbug zur Ermittlung des Reibwertes µ) diese Schätzwerte gestützt werden, was in **Fig.6** durch die entsprechende in Klammern gesetzte Eingangsgröße µ für das Modul 69 dargestellt ist.

Die solchermaßen im Modul 69 gewonnen Voraussagewerte für die besagten Kräfte, die mit F'_{x,i}, F'_{y,i} F'_{z_{,}i} bezeichnet sind, werden dann im sog. "Kraftschlussreserven"-Modul 64 mit den aus dem Modul 63 (= vertikaldynamische Erweiterung) übermittelten Daten für die Ist-Kräfte F_{x,i}, F_{y,i} F_{z,i} verglichen und auf Plausibilität geprüft.

In den bereits kurz angesprochenen Prioritätsmodulen 65, 66, 67, 68 werden jeweils für die relevanten Aktuatoren für das Längskräfte aufbringende Regelsystem und für das querdynamische Regelsystem und für das vertikaldynamische Regelsystem des Fahrzeugs die unterschiedlichen Funktionsanforderungen gesammelt und nach Prioritäten sortiert. Wie in der einleitenden Beschreibung bereits erläutert wurde, handelt es sich bei dem Längskräfte aufbringenden Regelsystem um die Steuerung des Bremsdruckes, wofür ein Modul 65 ("Priorität Bremsdruck") vorgesehen ist, sowie um die Steuerung des Abgabe-Drehmomentes des Fzg.-Antriebsaggregates, wofür ein Modul 66 ("Priorität Motormoment") vorgesehen ist. Ein querdynamisches Regelsystem arbeitet bspw. mit Eingriffen in die Fzg.-Lenkung, wofür ein Modul 67 ("Priorität Lenkwinkel") vorgesehen ist, während ein vertikaldynamisches Regelsystem - wie bereits erwähnt wurde - bevorzugt radindividuell in die Federung und Dämpfung eingreift und/oder das Verhalten des Fahrwerk-Stabilisators geeignet variiiert. Für diese letztgenannten Eingriffe ist ein Modul 68 ("Priorität Vertikalkraft") verantwortlich.

Wie in **Fig.6** dargestellt, können im Prioritäts-Modul 65 ("Priorität Bremsdruck") neben den Anforderungen aus dem Giermomentregler 62 noch der Fahrerwunsch und die Anforderungen aus einem weiterhin vorhandenen üblichen ABS-Softwaremodul (für die Steuerung eines Bremsschlupf-Systems) sowie aus einem sog. ASC/ASR-Modul (hierbei handelt es sich um eine sog. Automatische Stabilitäts Control oder Antriebsschlupfregelung) bewertet werden. Derartige Prioritätsschaltungen sind aus Fahrdynamikreglern für die Bremsdrucksteuerung bekannt. Abweichend davon werden nun hier in den Prioritätsmodulen 65 bis 68 die Stellsignale an die entsprechenden Aktuatoren anhand der Schätzwerte für die Kraftschlussreserven ΔF_{x,i}, ΔF_{y,i} und ΔF_{z,i} auf Umsetzbarkeit geprüft und ggf. direkt an den Giermomentregler 62 oder an sonstige betroffene Regler rückgeführt.

Der zweite in **Fig.6** dargestellte direkte Pfad der Schätzwerte für die Kraftschlußreserven ΔF_{x,i}, ΔF_{y,i} und ΔF_{z,i} aus dem Modul 64 ("Kraftschlussreserven") zum Giermomentregler 62 ist nicht unbedingt erforderlich, aber hilfreich, um die Fahrstabilität bei bestmöglichem Fahrkomfort aufrecht zu erhalten. Zusätzlich sollen jedoch neben den Eingriffen in die Steuerung des Fzg.-Antriebsaggregates auch noch Eingriffe bspw. über Lenkungssysteme und/oder Vertikaldynamiksysteme erfolgen, wobei sich anhand der genannten Schätzwerte für die Kraftschlußreserven ΔF_{x,i}, ΔF_{y,i} und ΔF_{z,i} der für die jeweilige Fahrsituation optimale Aktuator ansteuern läßt. So ist es sinnvoll, solchen Instabilitäten, die durch Radlaständerungen (z.B. infolge von Lastwechseln) ausgelöst wurden, zunächst mit Hilfe von Radlastverlagerungen (z.B. über gezielte Stabilisatorverstellungen) entgegenzuwirken. Erst falls diese nicht ausreichen, unterstützen Lenkungs- und/oder Bremseneingriffe die Maßnahmen zur Gewinnung der Fahrstabilität des Fahrzeuges. Wenn dagegen zu heftige Lenkmanöver des Fahrers/Fahrzeugführers zu Stabilitätseinbußen führen würden, sind automatische Lenkungseingriffe am wirkungsvollsten. Ebenso wie gezielte Bremseneingriffe, wenn z.B. Bremsmanöver in der Kurve Instabilitäten nach sich ziehen würden.

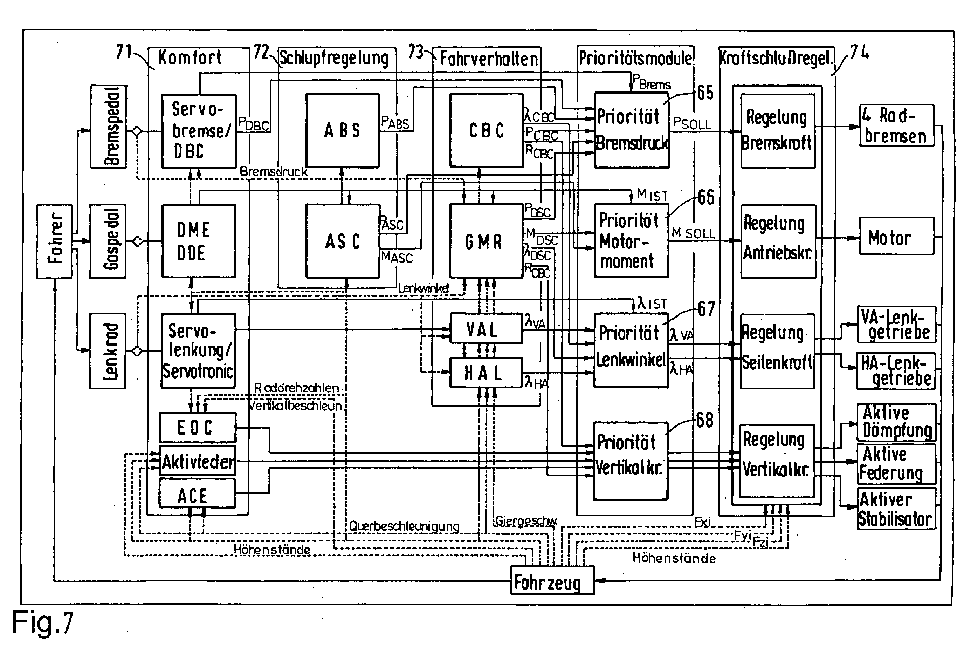

Im folgenden wird nunmehr auf die beigefügte **Figur 7** Bezug genommen, in welcher ein sog. überlagerter Kraftschlußregler dargestellt ist, also ein Kraftschlußregler, welcher die beteiligten Regelsysteme geeignet ansteuert und der dabei verschiedenen bereits vorhandenen Fzg.-Regelsystemen überlagert ist. Ein solcher überlagerter Kraftschlussregler findet bevorzugt dann Anwendung, wenn in einem bereits fertig entwickelten Regelsystem oder in einem Verbund von Regelsystemen nachträglich auch noch der Kraftschluß optimiert werden soll. Da diese Funktion nicht bereits in die Grundfunktion eingebunden ist damit unvermeidbar zusätzlicher Aufwand erforderlich, was u.U. zusätzliche Rechenzeit kosten kann.

In **Fig.7** ist ein Beispiel für einen derartigen Systemverbund dargestellt, in dem mehrere längsdynamische, querdynamische und vertikaldynamische Regelsysteme miteinander vernetzt sind. In der Form eines Ablaufplans zeigt diese Figurendarstellung, wie die unterschiedlichen Regelfunktionen in den Regelkreis Fahrer/Fahrzeug eingebunden sind. Links im Bild sind die Bedienelemente des Fahrers für seine wichtigsten fahrerischen Tätigkeiten (Bremsen, Gasgeben und Lenken) aufgeführt; rechts die Aktuatoren, die er hierbei betätigt und mit denen er das Fahrverhalten des Fahrzeugs bestimmt. (Das Fzg.-Antriebsaggregat ist dabei mit "Motor" bezeichnet).

Zwischen den genannten Bedienelementen und den genannten Aktuatoren sind in der Figurendarstellung die Regelfunktionen aufgereiht, die den Fahrer/Führer des Fahrzeugs bei seinen Tätigkeiten unterstützen und dabei das Fahrverhalten ebenfalls beeinflussen. Nach der Art ihrer Unterstützung sind diese (an sich vorbekannten Systeme) in vertikale Spalten gegliedert und werden im folgenden einzeln näher erläutert, wobei darauf hingewiesen sei, daß von Modulen ausgehende Stellanforderungen in durchgezogenen Linien und in Modulen eingehende Sensorleitungen in gestrichelten Linien dargestellt sind.

Die den "Komfort" beeinflussenden Funktionen 71 sind dem Fahrer entweder bei seinen Tätigkeiten behilflich (wie Servobremse oder Servolenkung) oder sorgen durch Beeinflussung der Vertikalkräfte für optimalen Fahrkomfort. Im einzelnen ist im oberen Feld des sog. Komfort-Moduls 71 neben der (pneumatischen oder hydraulischen) Servobremse mit der Dynamischen Bremsen Control "DBC" eine zusätzliche elektronische Unterstützungsfunktion mit aufgeführt, die speziell in Notbremssituationen einen extrem schnellen Bremsdruckaufbau ermöglicht und hierzu den Fahrerwunsch aus der Anstiegsgeschwindigkeit des Bremsdrucks abliest. Ihre Bremsdruckanforderung (mit p_{DBC} bezeichnet) führt zum auch hier vorgesehenen, i.V.m. Fig.6 bereits erläuterten Prioritäts-Modul 65 ("Bremsdruck"). Im Komfort-Modul 71 befinden sich unterhalb der Bremsfunktionen die Funktionen der Motorsteuerung (Digitale Motor Elektronik "DME" oder Digitale Diesel Elektronik "DDE") sowie der (hydraulischen oder elektrischen) Servolenkung mit der "Servotronic" als elektronische Zusatzfunktion, welche die Lenkunterstützung in Abhängigkeit von der Fahrgeschwindigkeit variiert, damit vor allem beim Parkieren eine höhere Unterstützung gewährt wird. Im unteren Feld des Komfort-Moduls 71 sind die vertikaldynamischen Regelsysteme "EDC" (Elektronische Dämpfer Control), die Aktive Federung sowie die Stabilisatorverstellung "ACE" (Active Cornering Enhancement) wiedergegeben, die fahrsituationsbezogen die Dämpfer-, Feder- und Stabilisatorkräfte derart einstellen, dass stets für einen optimalen Fahrkomfort (u.a. möglichst hohe Aufbauruhe) gesorgt ist.

Mit der Bezugsziffer 72 ist ein weiteres an sich bekanntes Modul bezeichnet, welches die sog. Schlupfregelfunktionen ausübt. Falls der Fahrer des Fahrzeugs stärker bremst oder mehr Gas gibt, als es die momentanen Fahrbahnverhältnisse zulassen, so begrenzen bekanntermaßen die Regelsysteme "ABS" (Antiblockiersystem) und "ASC" (Automatische Stabilitäts Control) den Brems- bzw. Antriebsschlupf und regeln ihn derart, dass maximale Längskräfte Fₓ und Seitenkräfte F_{y} übertragen werden können. Die jeweiligen Bremsdruckanforderungen p_{ABS}, p_{ASC} und Momentenanforderungen M_{ASC} bezüglich des Motors sind Ausgangsgrößen dieses Moduls.

Mit der Bezugsziffer 73 ist ein sog. Fahrverhalten-Modul bezeichnet, in welchem u.a. die sogenannte Cornering Brake Control "CBC" enthalten ist. Diese ist eine Steuerungsfunktion zur Verbesserung der Fahrstabilität beim Bremsen in der Kurve, die durch unterschiedlichen Bremsdruckaufbau links/rechts ein Kompensationsmoment erzeugt, das der eindrehenden Gierreaktion beim Kurvenbremsen entgegenwirkt und die die Ausgangsgröße p_{CBC} als Bremsdruckanforderung hat. Wie durch den Pfad λ_{CBC} angedeutet, kann bei Vorhandensein einer Vorderachs-Überlagerungslenkung, welche dem Lenkwunsch des Fahrers einen zusätzlichen Lenkwinkel überlagert oder mit einer Hinterachslenkung das benötigte Kompensationsmoment über entsprechende Lenkeinschläge verstärkt werden. Gleiches gilt für vertikaldynamische Regelsysteme, die - wie weiter oben ausführlich erläutert wurdegezielte Radlaständerungen (in diesem Fahrverhalten-Modul 73 mit R_{CBC} bezeichnet) durchführen (können).

Die in diesem Modul 73 weiterhin vorhandene Giermomentregelung GMR ist grundsätzlich die Kernfunktion von Fahrdynamikregelungen, die weiter oben i.V.m. Fig.6 bereits ausführlich erläutert wurde. Dabei können eine Überlagerungslenkung an der Vorderachse (VAL) und/oder eine Hinterachslenkung (HAL) ebenfalls zur Optimierung der Fahrstabilität herangezogen werden, sofern sie - wie in Fig. 7 dargestellt - über dieselben Eingangsgrößen wie der Giermomentregler GMR verfügen.

Die Funktion der weiterhin im System nach **Fig.7** enthaltenen sog. Prioritäts-Module 65, 66, 67, 68 wurde weiter oben bereits anhand Fig.6 erläutert und ist dieser im wesentlichen vergleichbar. Im Gegensatz zur Variante nach Fig. 6, wo die Kraftschlussregelung in den Prioritäts-Modulen integriert ist, erfolgt bei der nunmehr erläuterten Variante nach **Fig.7** die Kraftschlußregelung in einem separaten, den Prioritäts-Modulen 65 - 68 nachgeschalteten Modul 74. Bei der hier gezeigten Darstellung ist vorausgesetzt, dass die tatsächlichen Werte der zu regelnden Reifenkräfte F_{x,i}, F_{y,i} F_{z,i} als Eingangsgrößen zur Verfügung stehen. Falls die hierzu benötigten Sensoren nicht verfügbar sind, ist eine Verknüpfung des Kraftschlussregler-Rechenmodells mit den übrigen Rechenmodellen (GMR und ggf. VAL sowie HAL) erforderlich, um deren Schätzwerte für F_{x,i}, und F_{y,i} zu übernehmen.

Bei dem in **Fig.7** dargestellten Systemverbund handelt es sich um eine Maximalkonfiguration an Fahrwerk-Regelfunktionen. Die erfindungsgemäße Kraftschlussregelung lässt sich selbstverständlich aber auch bei reduzierten Funktionsumfängen anwenden, genauso wie auch bei einer reduzierten Anzahl an Sensoren. Dann müssen die fehlenden Signale durch plausibilisierte Schätzwerte ersetzt werden.

Grundsätzlich kann mit der beschriebenen Vorgehensweise vorausberechnet werden, wie stark ein Rad individuell noch gebremst, gelenkt oder entlastet werden kann, bis die horizontalen Reifenkräfte an ihre Begrenzung gelangen, und damit die Aktionen des Fahrers oder eines Regelsystems wirkungslos werden bzw. das Fahrzeug unbeherrschbar wird. Dadurch wird die Regelgüte eines Fahrdynamikregelung-Systems (oder auch anderer miteinander verknüpfter längs-, quer- oder vertikaldynamischer Systeme) besser und zuverlässiger. Durch die optimale Ausnutzung des vorhandenen Kraftschlußpotentials werden die fahrdynamischen Grenzen erweitert, die Fahrsicherheit wie auch die Fahrleistungen verbessert und der Auslegungsspielraum für Komfortoptimierungen vergrößert, wobei noch darauf hingewiesen sei, daß durchaus eine Vielzahl von Details abweichend von obigen Erläuterungen gestaltet sein kann, ohne den Inhalt der Patentansprüche zu verlassen.

## Patentansprüche

1. Fahrdynamik-Regelsystem eines insbesondere vierrädrigen Kraftfahrzeuges, wobei das zwischen Rädern und Fahrbahn zur Verfügung stehende Kraftschlußpotential durch ein Rechenverfahren ermittelt wird und unter Berücksichtigung hiervon ein Längskräfte auf die Fahrzeugräder aufbringendes Regelsystem (72, 73) geeignet betrieben wird,
**dadurch gekennzeichnet, dass** in die Berechnung (64) des Kraftschlußpotentials neben den in der Horizontalebene zwischen den Rädern und der Fahrbahn übertragenen Kräften (60) zusätzlich die in Vertikalrichtung orientierte Radlast (63) mit eingeht und dass ein Kraftschlussregler (74) neben dem Längskräfte auf die Fahrzeugräder aufbringenden Regelsystem zusätzlich ein querdynamisches Regelsystem, welches Seitenkräfte in die Räder einleitet und ein vertikaldynamisches Regelsystem, welches die in Vertikalrichtung orientierte Radlast ändert, für ein gewünschtes Fahrmanöver derart ansteuert, dass das vorhandene Kraftschlusspotential weitgehend ausgenutzt werden kann.

2. Fahrdynamik-Regelsystem nach Anspruch 1,
**dadurch gekennzeichnet, dass** der Kraftschlussregler Prioritäten (65-68) hinsichtlich unterschiedlicher Kriterien, wie Fahrsicherheit, Fahrverhalten und Fahrkomfort setzt.

3. Fahrdynamik-Regelsystem nach einem der vorangegangenen Ansprüche,
**dadurch gekennzeichnet, dass** im Kraftschlussregler (74) eine vertikaldynamische Simulation (69) zur Gewinnung und Berücksichtigung von Voraussagewerten für die in Vertikalrichtung orientierten Radlasten vorgesehen ist.

4. Fahrdynamik-Regelsystem nach einem der vorangegangenen Ansprüche,
**dadurch gekennzeichnet, dass** der Kraftschlussregler (74) in einem ansonsten an sich bekannten Fahrdynamikregler (71, 72, 73) integriert ist.

5. Fahrdynamik-Regelsystem nach einem der Ansprüche 1 bis 3,
**dadurch gekennzeichnet, dass** der Kraftschlussregler (74) verschiedenen bereits vorhandenen Fahrzeug-Regelsystemen (71, 72, 73) überlagert ist.

## Claims

1. A driving dynamics control system of, more especially, a four wheel motor vehicle, the adhesion potential available between wheels and road being determined by a calculation method and, taking this into account, a control system (72, 73) applying longitudinal forces to the vehicle wheels being operated in a suitable manner, **characterised in that** included in the calculation (64) of the adhesion potential, in addition to the forces (60) transmitted in the horizontal plane between the wheels and the road is also the wheel load (63) oriented in a vertical direction and **in that** an adhesion controller (74) also activates, in addition to the control system applying longitudinal forces to the vehicle wheels, a transverse dynamic control system which introduces side forces into the wheels and a vertical dynamic control system which changes the wheel load oriented in a vertical direction, for a desired driving manoeuvre such that the available adhesion potential can be substantially utilised.

2. A driving dynamics control system according to claim 1, **characterised in that** the adhesion controller sets priorities (65-68) with respect to different criteria, such as driving safety, driving behaviour and driving comfort.

3. A driving dynamics control system according to any one of the preceding claims, **characterised in that** a vertical dynamic simulation (69) for obtaining and considering prediction values for the wheel loads oriented in a vertical direction is provided in the adhesion controller (74).

4. A driving dynamics control system according to any one of the preceding claims, **characterised in that** the adhesion controller (74) is integrated in a driving dynamics controller (71, 72, 73) which is otherwise known per se.

5. A driving dynamics control system according to any one of claims 1 to 3, **characterised in that** the adhesion controller (74) is superimposed on various vehicle control systems (71, 72, 73) which are already present.

## Revendications

1. Système de régulation de la dynamique de roulage d'un véhicule automobile notamment à quatre roues, qui détermine le potentiel d'adhérence disponible entre les roues et la chaussée au moyen d'une procédure de calcul et, en prenant celui-ci en considération, active un système de régulation (72, 73) approprié appliquant des forces longitudinales sur les roues du véhicule,
**caractérisé en ce que**
en plus des forces (60) transmises dans le plan horizontal entre les roues et la chaussée, le calcul (64) du potentiel d'adhérence comprend également la charge de roue (63) orientée dans la direction verticale, et
en plus du système de régulation appliquant des forces longitudinales sur les roues du véhicule, un régulateur d'adhérence (74) pilote également, pour effectuer une manoeuvre de conduite souhaitée, un système de régulation de la dynamique transversale qui introduit des forces latérales sur les roues et un système de régulation de la dynamique verticale qui modifie la charge de roue orientée dans la direction verticale, de telle sorte que le potentiel d'adhérence existant puisse être largement utilisé.

2. Système de régulation de la dynamique de roulage selon la revendication 1,
**caractérisé en ce que**
le régulateur d'adhérence place des priorités (65 à 68) par rapport à différents critères, tels que la sécurité de conduite, le comportement au roulage et le confort de conduite.

3. Système de régulation de la dynamique de roulage selon l'une des revendications précédentes,
**caractérisé en ce qu'**
une simulation de la dynamique verticale (69) est prévue dans le régulateur d'adhérence (74) pour obtenir et prendre en considération des valeurs de prédiction pour les charges de roues orientées dans la direction verticale.

4. Système de régulation de la dynamique de roulage selon l'une des revendications précédentes,
**caractérisé en ce que**
le régulateur d'adhérence (74) est intégré dans un régulateur de dynamique de roulage (71, 72, 73) bien connu en soi.

5. Système de régulation de la dynamique de roulage selon l'une des revendications 1 à 3,
**caractérisé en ce que**
le régulateur d'adhérence (74) est superposé à différents systèmes de régulation (71, 72, 73) déjà présents dans le véhicule.
